# EUROPEAN PATENT SPECIFICATION

(11) **EP 3 427 358 B1**
(45) Date of publication and mention of the grant of the patent: **16.12.2020**
(21) Application number: 17716051.2
(22) Date of filing: 09.03.2017
(51) Int. Cl.: H02G 15/115, H02G 3/06, H02G 15/013

(54) **CABLE GLAND DEVICE FOR THE ELECTRIC INTERCONNECTION OF ELECTRIC CABLES**
KABELVERSCHRAUBUNGSVORRICHTUNG ZUR ELEKTRISCHEN VERBINDUNG VON STROMKABELN
DISPOSITIF DE GOUPILLE DE CÂBLE POUR L'INTERCONNEXION ÉLECTRIQUE DE CÂBLES ÉLECTRIQUES

(30) Priority: 11.03.2016 IT UA20161603
(43) Date of publication of application: 16.01.2019
(73) Proprietor: TECHNO GROUP S.r.l., 22070 Guanzate (CO) (IT)
(72) Inventor: GALLI, Sandro, 22070 Guanzate (CO) (IT)
(74) Representative: Brunacci, Marco
(86) International application number: PCT/IB2017/051391
(87) International publication number: WO 2017/153946

(56) References cited:
- EP-A1- 1 881 576
- AU-B2- 551 882
- DE-A1-102013 101 120
- GB-A- 2 465 609
- US-A1- 2013 029 541
- US-A1- 2015 200 530

## Description

### Technical Field

The present invention relates to a cable gland device for the electric interconnection of electric cables.

### Background Art

In the sector of electric cable devices, cable gland devices are known comprising a body, substantially elongated, having at least one opening for the passage of an electric cable and blocking means adapted to prevent the axial sliding of the electric cable following the traction of the electric cable itself caused by stresses due to external forces.

Generally, the cable gland blocking means of known type have a fixing ring which is screwed onto the cable gland body and defines a truncated-cone surface which, by acting on an elastically deformable body, causes it to contract in a radial direction with respect to the longitudinal axis of the elongated body of such devices.

The contraction of the elastically deformable body on the electric cable results in the elastically deformable body itself adhering to the electric cable and preventing it from moving along the longitudinal axis.

The cable glands of known type have a main drawback of comprising a high number of components to achieve the tightening of the electric cables inside the body and, consequently, the manufacture and assembly of such components involves high costs which in turn are transferred onto the retail price.

Another drawback is tied to the assembly operations of such multiplicity of components, with a related risk of assembly errors by the operator and of making insecure and potentially hazardous connections.

In the patent document EP1944844 A1 a different embodiment is described of the cable gland devices of known type wherein such cable gland devices are coupleable to electric appliances in general and equipped with safety elements.

The cable gland device comprises a body which defines a passage channel for the electric cable.

Such body has one extremity fixable to an electric appliance in general and another extremity defining tightening means on the electric cable.

The device comprises, in a single body piece with the body, an elastically yielding covering placed at the tightening means and a cap element provided with a hole defining the passage channel for the entry of the electric cable in the body of the cable gland and which can be screwed onto a portion of the body. The cap element, once engaged with the device body, defines tightening means of the electric cable to prevent it from moving along the longitudinal axis of the body.

At the extremity of the body which engages with the cap element an elastically yielding covering element is provided made of thermoplastic rubber.

Such layer of thermoplastic rubber goes to make up a single body piece with the body of the device inasmuch as it is over-molded at the extremity of the body itself and encapsulates a number of elastically yielding tangs which, by engaging with the cap element, are tightened radially to block the electric cable inserted in the passage channel, by screwing up the cap element to the extremity of the body.

Such cable gland device is, nevertheless, susceptible to upgrading in order to make substantially tight devices which ensure the insulation of the electric cable connections with respect to the outside environment under conditions of greater safety of use.

In this respect, it is underlined that the devices of known type can be assembled and disassembled by the end user for an undefined number of times and in the event of faults due, e.g., to water penetrating inside the devices, it is not possible to understand whether such faults are due to the lack of tightness of the device attributable to the manufacturer or to any tampering caused by human actions attributable to the end user.

Other cable gland devices for the electric interconnection of electric cables are known from GB 2 465 609, US 2013/029541, DE 10 2013 101120, US 2015/200530, EP 1 881 576 and AU 551 882.

### Description of the Invention

The main aim of the present invention is to provide a cable gland device for the electric interconnection of electric cables which has a high degree of tightness once assembled and which permits detecting any tampering with the devices themselves due to human actions performed after the first wiring of the electric cables and assembly of the device, to prevent any faults in the electric connections between the electric cables.

Another object of the present invention is to provide a cable gland device for the electric interconnection of electric cables which allows to overcome the mentioned drawbacks of the prior art within the ambit of a simple, rational, easy and effective to use as well as affordable solution.

The above mentioned objects are achieved by the present cable gland device for the electric interconnection of electric cables having the characteristics of claim 1.

### Brief Description of the Drawings

Other characteristics and advantages of the present invention will become more evident from the description of a preferred, but not exclusive, embodiment of a cable gland device for the electric interconnection of electric cables, illustrated by way of an indicative, but non-limiting example in the accompanying drawings, wherein:

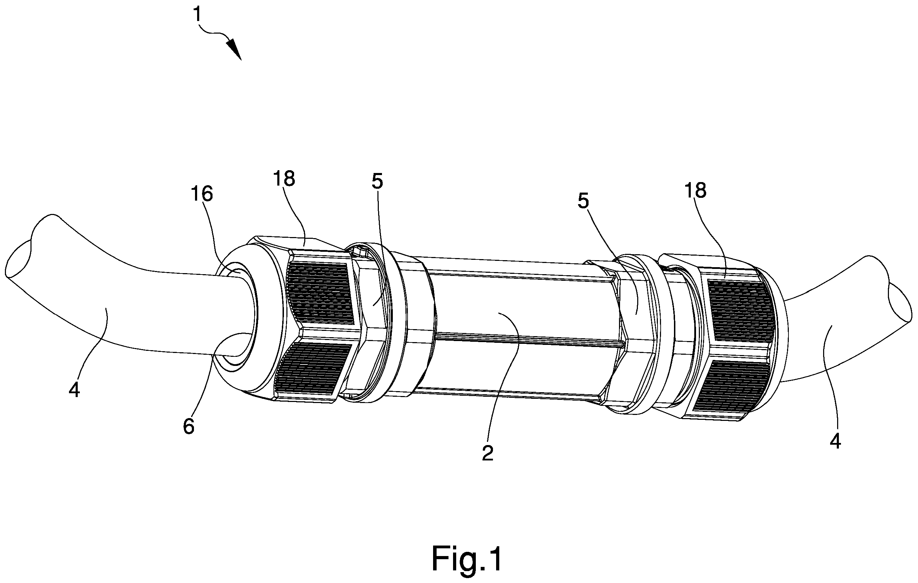

Figure 1 is an axonometric view of the device according to the invention in a first embodiment;

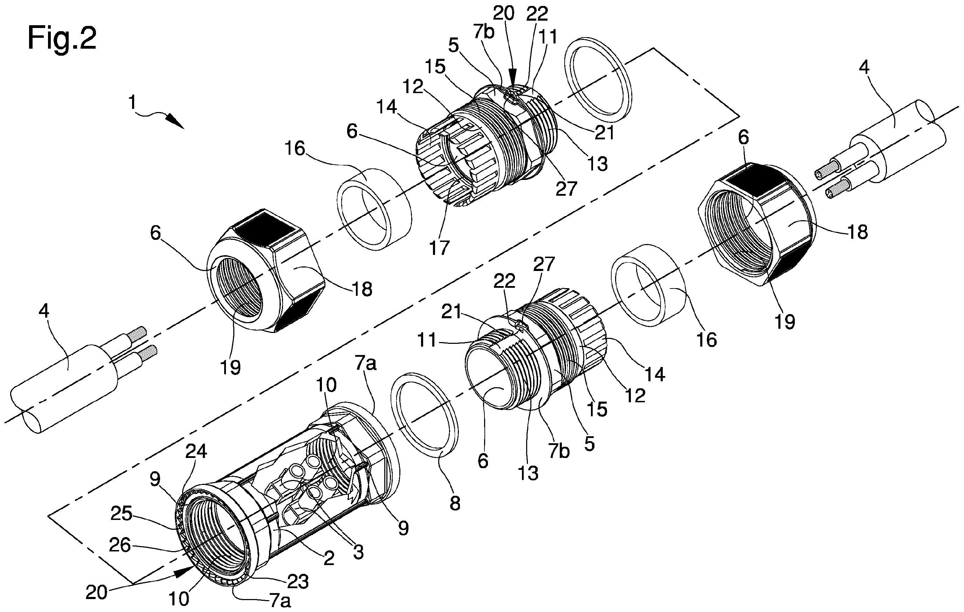

Figure 2 is an exploded view of the device of Figure 1;

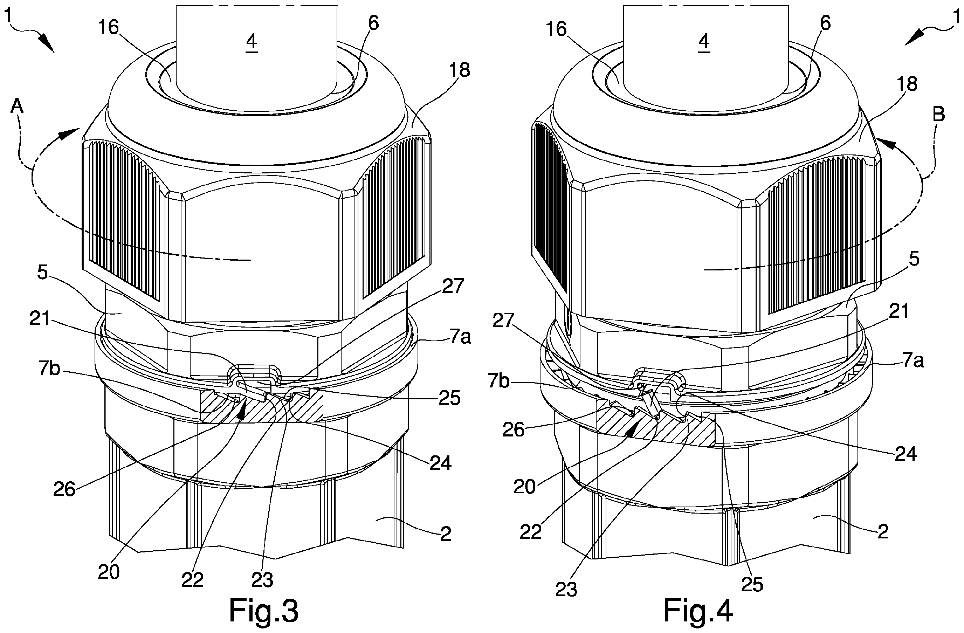

Figure 3 is an axonometric view of a detail of the device of Figure 1 in a screwing configuration;
Figure 4 is an axonometric view of a detail of the device of Figure 1 in an unscrewing configuration;
Figure 5 is an axonometric view of the device according to the invention in a second embodiment;
Figure 6 is an exploded view of the device of Figure 5;
Figure 7 is an axonometric view of a detail of the device of Figure 5 in a first configuration;
Figure 8 is an axonometric view of a detail of the device of Figure 5 in a second configuration.

### Embodiments of the Invention

With particular reference to such figures, globally indicated with reference numeral 1 is a cable gland device for the electric interconnection of electric cables.

The device 1 comprises:
- a first body 2, made of an electrically insulating material, adapted to contain at least a terminal board element 3 for the electric interconnection of two electric cables 4; and
- at least a second body 5, made of an electrically insulating material, coupleable to the first body 2 and comprising a passage channel 6 of one of the electric cables 4 and tightening means 14, 16 of each electric cable 4 inside the passage channel 6. In the embodiments shown in the illustrations, the device 1 comprises a pair of second bodies 5 each having a relative passage channel 6 for the insertion of a respective electric cable 4.

The first body 2 and the second body 5 have abutment surfaces 7a, 7b complementary to one another adapted to come into contact in a coupling configuration between the first body 2 and the second body 5.

Advantageously, the device 1 comprises sealing means 8 interposable between the abutment surface 7a of the first body 2 and the abutment surface 7b of the second body 5 and adapted to define a tight coupling between the first body 2 and the second bodies 5.

Advantageously, the sealing means 8 are made of an elastically deformable and electrically insulating polymer material and are adapted to fill the space between the abutment surface 7a of the first body 2 and the abutment surface 7b of the second body 5 in the coupling configuration.

The first hollow body 2, having a substantially cylindrical conformation, comprises a pair of extremal portions 9 opposite to one another, each of which having a first threaded stretch 10 formed on the inner surface of the first body 2 and arranged at the abutment surface of the first body 2.

The second body 5 is hollow, has a substantially cylindrical conformation and comprises a first end portion 11 and a second end portion 12 opposite to the first end portion 11.

The first end portion 11 has a second threaded stretch 13 complementary to the first threaded stretch 10 and formed on the outer surface of the second body 5 arranged at the abutment surface 7b of the second body 5.

Usefully, the second end portion 12 has a plurality of elastically yielding flanges 14, being part of the tightening means 14, 16, and a first threaded edge 15 arranged at the elastically yielding flanges 14.

Preferably, the tightening means 14, 16 comprise an elastically deformable reducer element 16 arranged at the flanges 14 and adapted to adhere to the body of the relative electric cable 4 in an assembly configuration wherein the body of the electric cable 4 remains in the fixed position with respect to the flanges 14. It cannot be ruled out that the tightening means 14, 16 comprise a pair of reducer elements 16 concentric with one another and usable at the same time depending on the difference between the dimensions of the diameter of the passage channel 6 and of the diameter of the electric cable 4, so the reducer elements themselves adhere perfectly to the body of the electric cable 4. Advantageously, the reducer element 16 is made of an elastomer thermoplastic material, e.g., of the SEBS-TPEV type.

More in detail, each second body 5 comprises an abutment seat 17 defined at the flanges 14 and adapted to receive in support the reducer element 16 which in turn surrounds the inner surface of the flanges 14.

Alternative embodiments cannot however be ruled out wherein the reducer element 16 is made in a single body piece with the second body 5 wherein the reducer element itself is over-molded at the flanges 14.

The device 1 comprises a cover element 18 coupleable to each second body 5 and having at least an opening 6 substantially mating with the passage channel 6.

Usefully, the cover element 18 comprises a second threaded edge 19 formed on the inner surface of the cover element itself.

The second threaded edge 19 is complementary to the first threaded edge 15 and is adapted to cooperate with the first threaded edge 15 in the assembly configuration.

The inner surface of the cover element 18 has a cone shape such as to engage with the flanges 14 when the cover element 18 is screwed onto the second end portion 12.

The flanges 14, in the assembly configuration, bend and are radially tightened as the cover element is gradually screwed onto the second body 5 and the second threaded edge 19 engages with the first threaded edge 15 so that the tightening means 14, 16 adhere perfectly to the body of the electric cable 4. According to the invention, the device 1 comprises tampering detection means 20 having at least a frangible portion 21 adapted to break at the same time of a first release of the bodies 2, 5 from the coupling configuration.

The tampering detection means 20 comprise:
- at least a stop element 21, coinciding with the frangible portion 21 and having a stop surface 22;
- at least a counter stop element 23 having a first counter stop surface 24 and a second counter stop surface 25 opposite to the first counter stop surface 24. The stop element 21 and the counter stop element 23 define a ratchet mechanism wherein the stop surface 22 is adapted to slither on at least one of the first and the second counter stop surface 24, 25.

Within this discussion, by the expression *ratchet mechanism* is meant the particular mechanism wherein the first counter stop surface 24 allows the movement of the stop element 21 with respect to the counter stop element 23 in a first direction of rotation, hindering in turn the movement of the stop element 21 with respect to the counter stop element 23 in a second direction of rotation opposite to the first direction of rotation, unless the breakage of the stop element 21 due to the force which the stop surface 22 applies on the first counter stop surface 24.

In the embodiments shown in the illustrations, the tampering detection means 20 comprise a plurality of stop elements 21 and a plurality of counter stop elements 23 and the space between the first counter stop surface 24 of one of the counter stop elements 23 and the second counter stop surface 25 of another of the counter stop elements 23 defines a housing seat 26 of one of the stop elements 21.

In a first embodiment shown in the illustrations 1 to 4, the counter stop elements 23 are formed on the abutment surface 7a of the first body 2 and the stop elements 21 are formed on the abutment surface 7b of the second body 5.

Each counter stop element 23 has a substantially rectangle-triangle profile and each housing seat 26 has a substantially rectangle-triangle profile complementary to the profile of each counter stop element 23.

As can be seen from the illustrations, the abutment surface 7a of the first body 2 has a saw-tooth profile.

Alternative embodiments cannot however be ruled out wherein the counter stop elements 23 have different profiles, e.g., rectangular, quadrangular or parallelepiped.

Consequently, each stop element 21 has a substantially elongated conformation and, in an idle position, has an inclination with respect to the abutment surface 7b of the second body 5 substantially coinciding with the inclination of each second counter stop surface 25.

Furthermore, each first stop surface 22 is orientated so that, in the idle position, it is substantially facing each first counter stop surface 24.

Usefully, the abutment surface 7b of the second body 5 comprises a plurality of housing cavities 27, each of which is adapted to contain one of the stop elements 21, obtained at the stop elements themselves.

The tampering detection means 20 are switchable between:
- a screwing configuration, wherein the second body 5 is rotated with respect to the first body 2 in a direction of screwing A wherein the stop elements 21 are movable in jogs with respect to the counter stop elements 23 and each of the stop elements 21 is adapted to engage a respective housing seat 26. Within this discussion, by the expression *movable in jogs* is meant the particular mechanism wherein, during the rotation of the second body 5 in the direction of screwing A, the stop surface 22 of each stop element 21 remains substantially facing each first counter stop surface 24 and does not apply any pressing force having a direction contrary to the direction of screwing A. More in detail, each stop element 21 arranged inside one of the housing seats 26 is adapted to slither on the second counter stop surface 25 and to bend with respect to the idle position until the extremity of the stop surface 22 reaches the point of convergence between the first stop surface 22 and the second stop surface and the stop element temporarily inserts itself inside the housing cavity 27. As the rotation in the direction of screwing A gradually advances, the stop element 21 exits from the housing cavity 27 and returns to the idle position wherein it inserts itself in a successive housing seat 26 with respect to the previous one; and
- an unscrewing configuration, wherein the second body 5 is rotated with respect to the first body 2 in a direction of unscrewing B opposite with respect to the direction of screwing A and each of the stop surfaces 22 enters in contact with a respective first counter stop surface 24. More in detail, the rotation in the direction of unscrewing B results in the stop surface 22 of each stop element 21 coming into contact with a respective first counter stop surface 24 and applying a pressing force, having the same direction as the direction of unscrewing B, on each first counter stop surface 24. The pressing force applied by the stop surface 22 on the first counter stop surface 24 results in the extremity of each stop element 21 bending until reaching an orientation of the opposite inclination with respect to the angle of inclination of the stop element itself in the idle position. In other words, in such unscrewing configuration, each of the stop elements 21 is subject to breakage following the rotation in the direction of unscrewing B of the second body 5 with respect to the first body 2.

Following the unscrewing configuration, it is easy to appreciate that after the first coupling and assembly phase of the second bodies 5 to the first body 2 a tampering operation has been performed by third parties, inasmuch as to obtain the breakage of the stop elements 21 a voluntary rotation needs to be made by third parties of the second bodies 5 in the direction of unscrewing B.

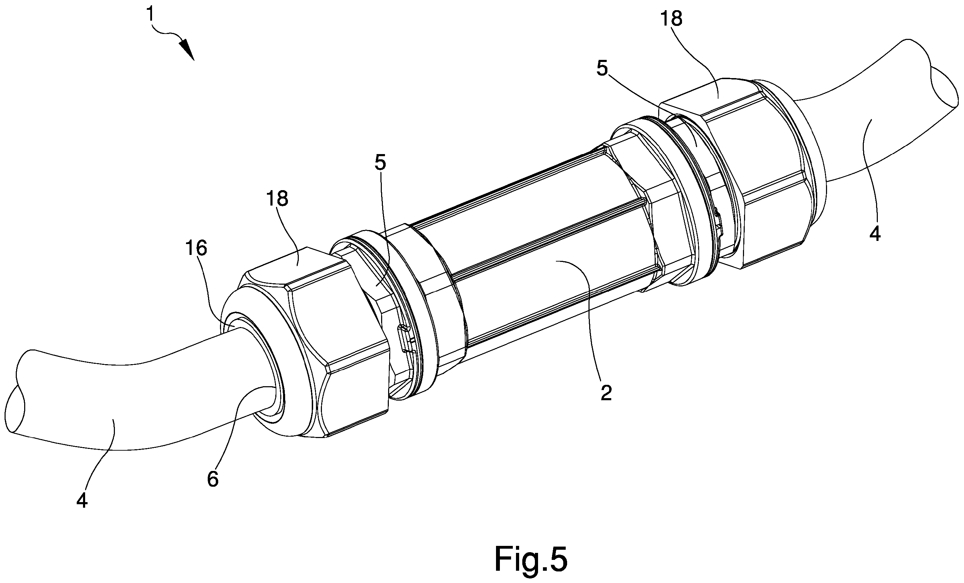

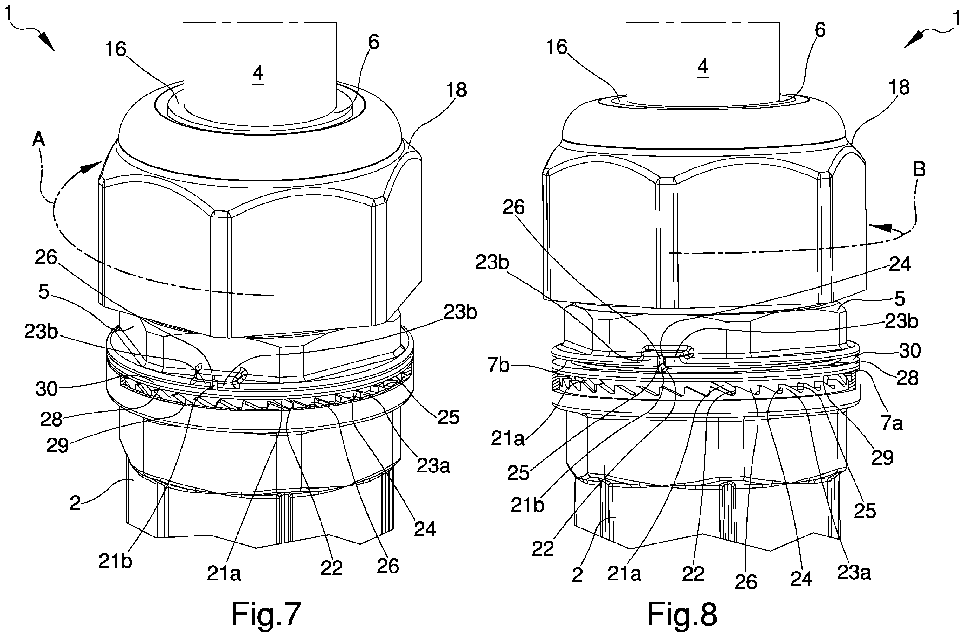

In a second alternative embodiment shown in Figures 5 to 8, the abutment surface 7a of the first body 2 comprises a first group of counter stop elements 23a and the abutment surface 7b of the second body 5 comprises a second group of counter stop elements 23b.

As can be seen from the illustrations, the first group of counter stop elements 23a coincides with the plurality of counter stop elements 23 of the first embodiment, while the second group of counter stop elements 23b is defined by a plurality of protrusions having a substantially rectangular profile wherein each pair of sides opposite and transversal to the directions of screwing and unscrewing A, B defines the first and the second counter stop surface 24, 25.

In this second embodiment, the tampering detection means 20 comprise an annular element 28 interposable between the abutment surface 7a of the first body 2 and the abutment surface 7b of the second body 5.

Preferably, the annular element 28, having a substantially circular profile and a substantially flattened conformation, comprises:
- a first surface 29, facing towards the abutment surface 7a of the first body 2, having a first group of stop elements 21a comprising a plurality of frangible portions 21 each insertable inside a respective housing seat 26 of the first group of counter stop elements 23a. As can be seen from the figures, the frangible portions 21 of the first group of stop elements 21a have a substantially elongated conformation and, in the idle position, have an inclination with respect to the first surface 29 substantially coinciding with the inclination of each second counter stop surface 25 of the first group of counter stop elements 23a. Usefully, the stop surface 22 of each frangible portion 21 of the first group of stop elements 21a, in the idle position, is arranged substantially facing to each first counter stop surface 24; and
- a second surface 30 facing towards the abutment surface 7b of the second body 5 and having at least a second group of stop elements 21b comprising a plurality of frangible portions 21, each insertable by interlocking inside a respective housing seat 26 of the second group of counter stop elements 23b. In particular, the frangible portions 21 of the second group of stop elements 21b have a substantially elongated conformation and, in the idle position, extend substantially parallel to the first and second counter stop surface 24, 25 of the second group of counter stop elements 23b.

Usefully, the first group of stop elements 21a has a number of stop elements 21 different to the number of stop elements 21 of the second group of stop elements 21b so that only one of the first group of stop elements 21a and the second group of stop elements 21b which has fewer stop elements 21 is subject to breakage in case of rotation of the second body 5 in a direction of unscrewing B with respect to the first body 2.

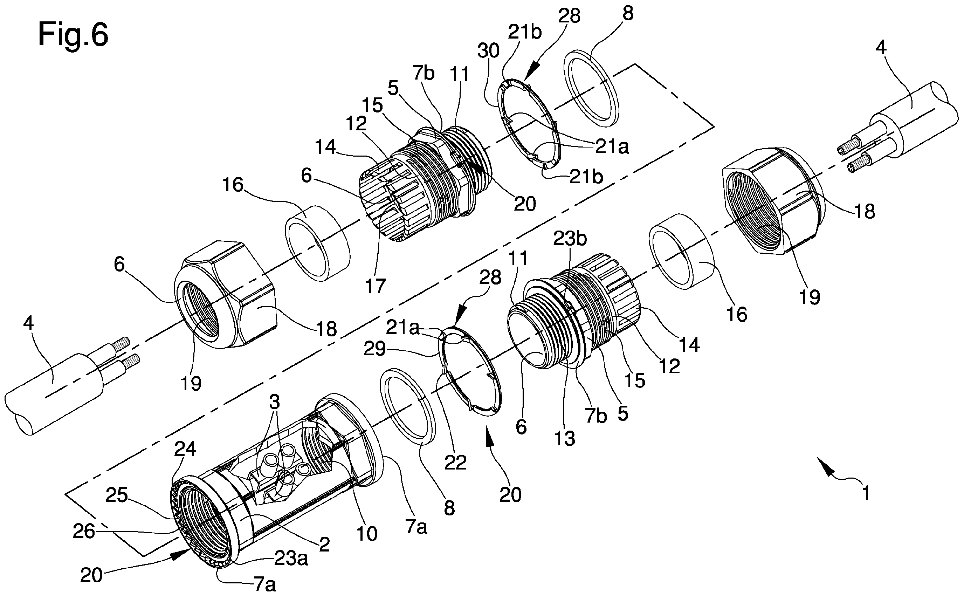

In the second embodiment, and visible in greater detail in Figure 6, the second group of stop elements 21b has fewer frangible portions 21 than the first group of stop elements 21a and the second group of counter stop elements 23b has a number of housing seats 26 coinciding with the number of elements of frangible portions 21 of the second group of stop elements 21b.

Alternative embodiments cannot however be ruled out wherein the first group of stop elements 21a has fewer frangible portions 21 than the second group of stop elements 21b and is therefore subject to breakage following rotation in the direction of unscrewing B.

The annular element 28 is switchable between:
- a first configuration, wherein the second body 5 is rotated with respect to the first body 2 in a direction of screwing A and at least one of the first group of stop elements 21a and the second group of stop elements 21b is movable in jogs with respect to the first group of counter stop elements 23a and the second group of counter stop elements 23b is adapted to engage respective housing seats 26. In particular, the second group of stop elements 21b is inserted by interlocking inside the housing seats 26 of the second group of counter stop elements 23b, while the first group of stop elements 21a is movable in jogs with respect to the first group of counter stop elements 23a according to the mechanism described in the screwing configuration for the first embodiment; and
- a second configuration, wherein the second body 5 is rotated with respect to the first body 2 in a direction of unscrewing B opposite with respect to the direction of screwing A and each of the stop surfaces 22 of the other of the first group of stop elements 21a and the second group of stop elements 21b comes into contact, respectively, with a respective first counter stop surface 24 of the first group of counter stop elements 23a and of the second group of counter stop elements 23b. It follows that at least one of the first group of stop elements 21a and the second group of stop elements 21b is subject to breakage following the rotation of the second body 5 in the direction of unscrewing B. More in detail, during the rotation in the direction of unscrewing B, the second group of stop elements 21b is subject to breakage because the resistance force of the first group of stop elements 21a to such a rotation, wherein the stop surfaces 22 of each stop element 21 come into contact and apply a pressing force having the same direction as the direction of unscrewing B on each first counter stop surface 24 of the first group of counter stop elements 23a, is greater than the resistance force of the second group of stop elements 21b.

Following the second configuration of the annular element 28 it is easy to appreciate that after the first coupling and assembly phase of the second bodies 5 to the first body 2 tampering has been performed by third parties, because in order to obtain the breakage of at least one of the groups of stop elements 21a, 21b a voluntary rotation by third parties must be made of the second bodies 5 in the direction of unscrewing B.

It has in practice been ascertained how the described invention achieves the intended objects and in particular the fact is underlined that the device made this way allows to ensure a high degree of tightness and protection of the electric connections against malfunctions due, e.g., to infiltrations of water inside the device itself once assembled.

In particular, the device made this way permits immediately detecting any tampering with the devices themselves due to human actions performed by third parties after the first wiring of the electric cables and assembly of the device by the operator for the purpose of preventing any faults in the electric connections of the electric cables.

## Claims

1. A cable gland device (1) for the electric interconnection of electric cables, comprising:
- at least a first body (2) made of an electrically insulating material adapted to contain at least a terminal board element (3) for the electric interconnection of at least two electric cables (4);
- at least a second body (5) made of an electrically insulating material coupleable to said first body (2) and comprising at least a passage channel (6) of at least one of said electric cables (4) and tightening means (14, 16) of said electric cable (4) inside said passage channel (6), said first body (2) and said second body (5) having abutment surfaces (7a, 7b) complementary to one another adapted to come into contact in a coupling configuration;
- tampering detection means (20) having at least a frangible portion (21) adapted to break at the same time of a first release of said bodies (2, 5) from said coupling configuration;
**characterized in that**:
- said first body (2) comprises a pair of extremal portions (9) opposite to one another, each extremal portion (9) having a first threaded stretch (10) formed on the inner surface of said first body (2) arranged at said abutment surface (7a) of the first body (2); and
- said second body (5) comprises a first end portion (11) and a second end portion (12) opposite to said first end portion (11), said first end portion (11) having a second threaded stretch (13) complementary to said first threaded stretch (10) and formed on the outer surface of said second body (5) arranged at said abutment surface (7b) of the second body (5), said second end portion (12) having a plurality of elastically yielding flanges (14), defining said tightening means (14, 16), and a first threaded edge (15) arranged at said plurality of elastically yielding flanges (14).

2. A device (1) according to claim 1, **characterized in that** said tightening means (14, 16) comprise at least an elastically deformable reducer element (16) arranged at said flanges (14) and adapted to adhere to the body of said electric cable (4) in said coupling configuration.

3. A device (1) according to one or more of the preceding claims, **characterized in that** it comprises at least a cover element (18) having at least an opening (6) substantially mating with said passage channel (6) and at least a second threaded edge (19) formed on the inner surface of said cover element (18), said second threaded edge (19) being complementary to said first threaded edge (15) and adapted to cooperate with said first threaded edge (15).

4. A device (1) according to one or more of the preceding claims, **characterized in that** said tampering detection means (20) comprise:
- at least a stop element (21) having at least a stop surface (22), said stop element (21) coinciding with said frangible portion (21);
- at least a counter stop element (23) having at least a first counter stop surface (24) and a second counter stop surface (25) opposite to said first counter stop surface (24), said stop element (21) and said counter stop element (23) defining a ratchet mechanism wherein said stop surface (22) is adapted to slither on at least one of said first and second counter stop surface (24, 25).

5. A device (1) according to one or more of the preceding claims, **characterized in that** said tampering detection means (20) comprise a plurality of said stop elements (21) and a plurality of said counter stop elements (23), the space between said first counter stop surface (24) of one of said counter stop elements (23) and said second counter stop surface (25) of another of said counter stop elements (23) being adapted to define a housing seat (26) of at least one of said stop elements (21).

6. A device (1) according to one or more of the preceding claims, **characterized in that** said plurality of stop elements (21) are formed on said abutment surface (7a) of the first body (2) and said plurality of counter stop elements (23) are formed on said abutment surface (7b) of the second body (5).

7. A device (1) according to one or more of the preceding claims, **characterized in that** said tampering detection means (20) are switchable between:
- a screwing configuration, wherein said second body (5) is rotated with respect to said first body (2) in a direction of screwing (A) wherein said stop elements (21) are movable in jogs with respect to said counter stop elements (23) and each of said stop elements (21) is adapted to engage a respective housing seat (26); and
- an unscrewing configuration, wherein said second body (5) is rotated with respect to said first body (2) in a direction of unscrewing (B) opposite with respect to said direction of screwing (A) and each of said stop surfaces (22) enters in contact with a respective first counter stop surface (24), each of said stop elements (21) being subject to breakage following said rotation in said direction of unscrewing (B) of said second body (5) with respect to said first body (2).

8. A device (1) according to one or more of claims 1 to 5, **characterized in that** said abutment surface (7a) of the first body (2) comprises a first group of said counter stop elements (23a) and said abutment surface (7b) of the second body (5) comprises a second group of said counter stop elements (23b).

9. A device (1) according to claim 8, **characterized in that** said tampering detection means (20) comprise at least an annular element (28) interposable between said abutment surface (7a) of the first body (2) and said abutment surface (7b) of the second body (5), said annular element (28) comprising:
- at least a first surface (29) facing towards said abutment surface (7a) of the first body (2) and having at least a first group of said stop elements (21a) each insertable inside a respective housing seat (26) of said first group of counter stop elements (23a); and
- at least a second surface (30) facing towards said abutment surface (7b) of the second body (5) and having at least a second group of said stop elements (21b) each insertable by interlocking inside a respective housing seat (26) of said second group of counter stop elements (23b).

10. A device (1) according to claim 9, **characterized in that** said first group of stop elements (21a) has a number of stop elements (21) different to said second group of stop elements (21b).

11. A device (1) according to one or more of claims 8 to 10, **characterized in that** said annular element (28) is switchable between:
- a first configuration, wherein said second body (5) is rotated with respect to said first body (2) in a direction of screwing (A) and at least one of said first group of stop elements (21a) and said second group of stop elements (21b) is movable in jogs with respect to said first group of counter stop elements (23a) and said second group of counter stop elements (23b) and is adapted to engage respective housing seats (26); and
- a second configuration, wherein said second body (5) is rotated with respect to said first body (2) in a direction of unscrewing (B) opposite with respect to said direction of screwing (A) and each of said stop surfaces (22) of the other of said first group of stop elements (21a) and said second group of stop elements (21b) comes into contact respectively with a respective first counter stop surface (24) of said first group of counter stop elements (23a) and of said second group of counter stop elements (23b), at least one of said first group of stop elements (21a) and said second group of stop elements (21b) being subject to breakage following the rotation in said direction of unscrewing (B).

12. A device (1) according to one or more of the preceding claims, **characterized in that** it comprises sealing means (8) interposable between said abutment surface (7a) of the first body (2) and said abutment surface (7b) of the second body (5).

## Patentansprüche

1. Eine Kabelverschraubungsvorrichtung (1) für die elektrische Verbindung von elektrischen Kabeln, umfassend:
- mindestens einen ersten Körper (2) aus einem elektrisch isolierenden Material, der geeignet ist, mindestens ein Klemmplattenelement (3) für die elektrische Verbindung von mindestens zwei elektrischen Kabeln (4) zu enthalten;
- mindestens einen zweiten Körper (5) aus einem elektrisch isolierenden Material, der mit dem ersten Körper (2) koppelbar ist und mindestens einen Durchgangskanal (6) umfasst von mindestens einem der elektrischen Kabel (4) und Spannmittel (14, 16) des elektrischen Kabels (4) im Inneren des Durchgangskanals (6), wobei der erste Körper (2) und der zweite Körper (5) zueinander komplementäre Anschlagflächen (7a, 7b) aufweisen, die geeignet sind, in einer Kupplungskonfiguration in Kontakt zu kommen;
- Manipulationserfassungsmittel (20) mit mindestens einem zerbrechlichen Abschnitt (21), der so ausgelegt ist, dass er gleichzeitig mit einem ersten Lösen der Körper (2, 5) aus der Kupplungskonfiguration abbricht;
**dadurch gekennzeichnet, dass**:
- der erste Körper (2) ein Paar einander gegenüberliegender Extremalbereiche (9) aufweist, wobei jeder Extremalbereich (9) ein erstes Gewindestück (10) aufweist, das an der Innenfläche des ersten Körpers (2) ausgebildet ist und an der Anschlagfläche (7a) des ersten Körpers (2) angeordnet ist; und
- der zweite Körper (5) einen ersten Endabschnitt (11) und einen zweiten Endabschnitt (12) gegenüber dem ersten Endabschnitt (11) aufweist, wobei der erste Endabschnitt (11) ein zweites Gewindestück (13) aufweist, das komplementär zu dem ersten Gewindestück (10) ist und an der Außenfläche des zweiten Körpers (5) ausgebildet ist, angeordnet an der Anschlagfläche (7b) des zweiten Körpers (5), wobei der zweite Endabschnitt (12) eine Vielzahl von elastisch nachgiebigen Flanschen (14) aufweist, die die Spannmittel (14, 16) definieren, und eine erste Gewindekante (15), die an der Vielzahl von elastisch nachgiebigen Flanschen (14) angeordnet ist.

2. Vorrichtung (1) gemäß Anspruch 1, **dadurch gekennzeichnet, dass** die Spannmittel (14, 16) mindestens ein elastisch verformbares Reduzierelement (16) umfassen, das an den Flanschen (14) angeordnet ist und geeignet ist, an dem Körper des elektrischen Kabels (4) in der Kupplungskonfiguration zu haften.

3. Vorrichtung (1) gemäß einem oder mehreren der vorhergehenden Ansprüche, **dadurch gekennzeichnet, dass** sie mindestens ein Abdeckelement (18) umfasst, das mindestens eine Öffnung (6) aufweist, die im Wesentlichen mit dem Durchgangskanal (6) zusammenpasst, und mindestens eine zweite Gewindekante (19), die auf der Innenfläche des Abdeckelements (18) ausgebildet ist, wobei die zweite Gewindekante (19) komplementär zu der ersten Gewindekante (15) ist und geeignet ist, mit der ersten Gewindekante (15) zusammenzuwirken.

4. Vorrichtung (1) gemäß einem oder mehreren der vorhergehenden Ansprüche, **dadurch gekennzeichnet, dass** die Manipulationserfassungsmittel (20) umfassen:
- mindestens ein Anschlagelement (21) mit mindestens einer Anschlagfläche (22), wobei das Anschlagelement (21) mit dem zerbrechlichen Abschnitt (21) zusammenfällt;
- mindestens ein Gegenanschlagelement (23) mit mindestens einer ersten Gegenanschlagfläche (24) und einer zweiten Gegenanschlagfläche (25), die der ersten Gegenanschlagfläche (24) gegenüberliegt, wobei das Anschlagelement (21) und das Gegenanschlagelement (23) einen Ratschenmechanismus definieren, wobei die Anschlagfläche (22) geeignet ist, auf mindestens einer der ersten und zweiten Gegenanschlagfläche (24, 25) zu gleiten.

5. Vorrichtung (1) gemäß einem oder mehreren der vorhergehenden Ansprüche, **dadurch gekennzeichnet, dass** die Manipulationserfassungsmittel (20) eine Vielzahl der Anschlagelemente (21) und eine Vielzahl der Gegenanschlagelemente (23) umfassen, wobei der Raum zwischen der ersten Gegenanschlagfläche (24) eines der Gegenanschlagelemente (23) und der zweiten Gegenanschlagfläche (25) eines anderen der Gegenanschlagelemente (23) so angepasst ist, dass er einen Gehäusesitz (26) von mindestens einem der Anschlagelemente (21) definiert.

6. Vorrichtung (1) gemäß einem oder mehreren der vorhergehenden Ansprüche, **dadurch gekennzeichnet, dass** die Vielzahl der Anschlagelemente (21) an der Anschlagfläche (7a) des ersten Körpers (2) und die Vielzahl der Gegenanschlagelemente (23) an der Anschlagfläche (7b) des zweiten Körpers (5) ausgebildet sind.

7. Vorrichtung (1) gemäß einem oder mehreren der vorhergehenden Ansprüche, **dadurch gekennzeichnet, dass** die Manipulationserfassungsmittel (20) umschaltbar sind zwischen:
- einer Einschraubkonfiguration, bei der der zweite Körper (5) in Bezug auf den ersten Körper (2) in einer Einschraubrichtung (A) gedreht wird, wobei die Anschlagelemente (21) in Vorsprüngen in Bezug auf die Gegenanschlagelemente (23) beweglich sind und jedes der Anschlagelemente (21) so angepasst ist, dass es in einen entsprechenden Gehäusesitz (26) eingreift; und
- einer Aufschraubkonfiguration, bei der der zweite Körper (5) in Bezug auf den ersten Körper (2) in einer Aufschraubrichtung (B) entgegengesetzt zur Einschraubrichtung (A) gedreht wird und jede der Anschlagflächen (22) in Kontakt mit einer jeweiligen ersten Gegenanschlagfläche (24) tritt, wobei jedes der Anschlagelemente (21) nach der Drehung in der Aufschraubrichtung (B) des zweiten Körpers (5) in Bezug auf den ersten Körper (2) einem Bruch unterliegt.

8. Vorrichtung (1) nach einem oder mehreren der Ansprüche 1 bis 5, **dadurch gekennzeichnet, dass** die Anschlagfläche (7a) des ersten Körpers (2) eine erste Gruppe der Gegenanschlagelemente (23a) und die Anschlagfläche (7b) des zweiten Körpers (5) eine zweite Gruppe der Gegenanschlagelemente (23b) umfasst.

9. Vorrichtung (1) nach Anspruch 8, **dadurch gekennzeichnet, dass** die Manipulationserfassungsmittel (20) mindestens ein ringförmiges Element (28) umfassen, das zwischen der Anschlagfläche (7a) des ersten Körpers (2) und der Anschlagfläche (7b) des zweiten Körpers (5) anordbar ist, wobei das ringförmige Element (28) umfasst:
- mindestens eine erste Fläche (29), die der Anschlagfläche (7a) des ersten Körpers (2) zugewandt ist und mindestens eine erste Gruppe der Anschlagelemente (21a) aufweist, die jeweils in einen entsprechenden Gehäusesitz (26) der ersten Gruppe von Gegenanschlagelementen (23a) einsetzbar sind; und
- mindestens eine zweite Fläche (30), die der Anschlagfläche (7b) des zweiten Körpers (5) zugewandt ist und mindestens eine zweite Gruppe der Anschlagelemente (21b) aufweist, die jeweils durch Verriegelung in einen entsprechenden Gehäusesitz (26) der zweiten Gruppe von Gegenanschlagelementen (23b) einsetzbar sind.

10. Vorrichtung (1) nach Anspruch 9, **dadurch gekennzeichnet, dass** die erste Gruppe von Anschlagelementen (21a) eine Anzahl von Anschlagelementen (21) aufweist, die sich von der zweiten Gruppe von Anschlagelementen (21b) unterscheidet.

11. Vorrichtung (1) nach einem oder mehreren der Ansprüche 8 bis 10, **dadurch gekennzeichnet, dass** das ringförmige Element (28) umschaltbar ist zwischen:
- einer ersten Konfiguration, bei der der zweite Körper (5) in Bezug auf den ersten Körper (2) in einer Einschraubrichtung (A) gedreht wird und mindestens eines der ersten Gruppe von Anschlagelementen (21a) und der zweiten Gruppe von Anschlagelementen (21b) in Vorsprüngen in Bezug auf die erste Gruppe von Gegenanschlagelementen (23a) und die zweite Gruppe von Gegenanschlagelementen (23b) beweglich ist und dazu ausgelegt ist, in entsprechende Gehäusesitze (26) einzugreifen; und
- eine zweite Konfiguration, bei der der zweite Körper (5) in Bezug auf den ersten Körper (2) in einer Aufschraubrichtung (B) entgegengesetzt zur Einschraubrichtung (A) gedreht wird und jede der Anschlagflächen (22) des anderen der ersten Gruppe von Anschlagelementen (21a) und der zweiten Gruppe von Anschlagelementen (21b) jeweils mit einer entsprechenden ersten Gegenanschlagfläche (24) der ersten Gruppe von Gegenanschlagelementen (23a) und der zweiten Gruppe von Gegenanschlagelementen (23b) in Kontakt kommt, wobei mindestens eines der ersten Gruppe von Anschlagelementen (21a) und der zweiten Gruppe von Anschlagelementen (21b) infolge der Drehung in der genannten Aufschraubrichtung (B) einem Bruch unterliegt.

12. Vorrichtung (1) nach einem oder mehreren der vorstehenden Ansprüche, **dadurch gekennzeichnet, dass** sie Dichtungsmittel (8) umfasst, die zwischen der Anschlagfläche (7a) des ersten Körpers (2) und der Anschlagfläche (7b) des zweiten Körpers (5) anordbar sind.

## Revendications

1. Dispositif presse-étoupe (1) pour l'interconnexion électrique de câbles électriques, comprenant :
- au moins un premier corps (2) réalisé dans un matériau électriquement isolant adapté pour contenir au moins un élément de plaque à bornes (3) pour l'interconnexion électrique d'au moins deux câbles électriques (4) ;
- au moins un second corps (5) réalisé dans un matériau électriquement isolant pouvant être couplé audit premier corps (2) et comprenant au moins un canal de passage (6) d'au moins l'un desdits câbles électriques (4) et des moyens de serrage (14, 16) dudit câble électrique (4) à l'intérieur dudit canal de passage (6), ledit premier corps (2) et ledit second corps (5) ayant des surfaces de butée (7a, 7b) complémentaires l'une de l'autre adaptées pour venir en contact dans une configuration de couplage ;
- des moyens de détection d'altération (20) ayant au moins une portion frangible (21) adaptée pour se rompre en même temps qu'une première libération desdits corps (2, 5) de ladite configuration de couplage ;
**caractérisé en ce que** :
- ledit premier corps (2) comprend une paire de portions extrêmes (9) opposées l'une à l'autre, chaque portion extrême (9) ayant une première étendue filetée (10) formée sur la surface interne dudit premier corps (2) agencée au niveau de ladite surface de butée (7a) du premier corps (2) ; et
- ledit second corps (5) comprend une première portion d'extrémité (11) et une seconde portion d'extrémité (12) opposée à ladite première portion d'extrémité (11), ladite première portion d'extrémité (11) ayant une seconde étendue filetée (13) complémentaire de ladite première étendue filetée (10) et formée sur la surface externe dudit second corps (5) agencée au niveau de ladite surface de butée (7b) du second corps (5), ladite seconde portion d'extrémité (12) ayant une pluralité de brides élastiques (14), définissant lesdits moyens de serrage (14, 16), et un premier bord fileté (15) agencé au niveau de ladite pluralité de brides élastiques (14).

2. Dispositif (1) selon la revendication 1, **caractérisé en ce que** lesdits moyens de serrage (14, 16) comprennent au moins un élément réducteur élastiquement déformable (16) agencé au niveau desdites brides (14) et adapté pour adhérer au corps dudit câble électrique (4) dans ladite configuration de couplage.

3. Dispositif (1) selon une ou plusieurs des revendications précédentes, **caractérisé en ce qu'**il comprend au moins un élément de couverture (18) ayant au moins une ouverture (6) sensiblement concordante avec ledit canal de passage (6) et au moins un second bord fileté (19) formé sur la surface interne dudit élément de couverture (18), ledit second bord fileté (19) étant complémentaire dudit premier bord fileté (15) et adapté pour coopérer avec ledit premier bord fileté (15).

4. Dispositif (1) selon une ou plusieurs des revendications précédentes, **caractérisé en ce que** lesdits moyens de détection d'altération (20) comprennent :
- au moins un élément d'arrêt (21) ayant au moins une surface d'arrêt (22), ledit élément d'arrêt (21) coïncidant avec ladite portion frangible (21) ;
- au moins un élément de contre-arrêt (23) ayant au moins une première surface de contre-arrêt (24) et une seconde surface de contre-arrêt (25) opposée à ladite première surface de contre-arrêt (24), ledit élément d'arrêt (21) et ledit élément de contre-arrêt (23) définissant un mécanisme de cliquet dans lequel ladite surface d'arrêt (22) est adaptée pour glisser sur au moins l'une desdites première et seconde surfaces de contre-arrêt (24, 25).

5. Dispositif (1) selon une ou plusieurs des revendications précédentes, **caractérisé en ce que** lesdits moyens de détection d'altération (20) comprennent une pluralité desdits éléments d'arrêt (21) et une pluralité desdits éléments de contre-arrêt (23), l'espace entre ladite première surface de contre-arrêt (24) de l'un desdits éléments de contre-arrêt (23) et ladite seconde surface de contre-arrêt (25) d'un autre desdits éléments de contre-arrêt (23) étant adapté pour définir un siège de logement (26) d'au moins l'un desdits éléments d'arrêt (21).

6. Dispositif (1) selon une ou plusieurs des revendications précédentes, **caractérisé en ce que** ladite pluralité d'éléments d'arrêt (21) sont formés sur ladite surface de butée (7a) du premier corps (2) et ladite pluralité d'éléments de contre-arrêt (23) sont formés sur ladite surface de butée (7b) du second corps (5).

7. Dispositif (1) selon une ou plusieurs des revendications précédentes, **caractérisé en ce que** lesdits moyens de détection d'altération (20) peuvent permuter entre :
- une configuration de vissage, dans laquelle ledit second corps (5) est mis en rotation vis-à-vis dudit premier corps (2) dans une direction de vissage (A) dans laquelle lesdits éléments d'arrêt (21) sont mobiles dans des crans vis-à-vis desdits éléments de contre-arrêt (23) et chacun desdits éléments d'arrêt (21) est adapté pour venir en prise avec un siège de logement (26) respectif ; et
- une configuration de dévissage, dans laquelle ledit second corps (5) est mis en rotation vis-à-vis dudit premier corps (2) dans une direction de dévissage (B) opposée vis-à-vis de ladite direction de vissage (A) et chacune desdites surfaces d'arrêt (22) entre en contact avec une première surface de contre-arrêt (24) respective, chacun desdits éléments d'arrêt (21) étant soumis à une rupture à la suite de ladite rotation dans ladite direction de dévissage (B) dudit second corps (5) vis-à-vis dudit premier corps (2).

8. Dispositif (1) selon une ou plusieurs des revendications 1 à 5, **caractérisé en ce que** ladite surface de butée (7a) du premier corps (2) comprend un premier groupe desdits éléments de contre-arrêt (23a) et ladite surface de butée (7b) du second corps (5) comprend un second groupe desdits éléments de contre-arrêt (23b).

9. Dispositif (1) selon la revendication 8, **caractérisé en ce que** lesdits moyens de détection d'altération (20) comprennent au moins un élément annulaire (28) pouvant être interposé entre ladite surface de butée (7a) du premier corps (2) et ladite surface de butée (7b) du second corps (5), ledit élément annulaire (28) comprenant :
- au moins une première surface (29) orientée vers ladite surface de butée (7a) du premier corps (2) et ayant au moins un premier groupe desdits éléments d'arrêt (21a), chacun pouvant être inséré à l'intérieur d'un siège de logement (26) respectif dudit premier groupe d'éléments de contre-arrêt (23a) ; et
- au moins une seconde surface (30) orientée vers ladite surface de butée (7b) du second corps (5) et ayant au moins un second groupe desdits éléments d'arrêt (21b), chacun pouvant être inséré par imbrication à l'intérieur d'un siège de logement (26) respectif dudit second groupe d'éléments de contre-arrêt (23b).

10. Dispositif (1) selon la revendication 9, **caractérisé en ce que** ledit premier groupe d'éléments d'arrêt (21a) a un nombre d'éléments d'arrêt (21) différent dudit second groupe d'éléments d'arrêt (21b).

11. Dispositif (1) selon une ou plusieurs des revendications 8 à 10, **caractérisé en ce que** ledit élément annulaire (28) peut permuter entre :
- une première configuration, dans laquelle ledit second corps (5) est mis en rotation vis-à-vis dudit premier corps (2) dans une direction de vissage (A) et au moins l'un dudit premier groupe d'éléments d'arrêt (21a) et dudit second groupe d'éléments d'arrêt (21b) est mobile dans des crans vis-à-vis dudit premier groupe d'éléments de contre-arrêt (23a) et dudit second groupe d'éléments de contre-arrêt (23b) et est adapté pour venir en prise avec des sièges de logement (26) respectifs ; et
- une seconde configuration, dans laquelle ledit second corps (5) est mis en rotation vis-à-vis dudit premier corps (2) dans une direction de dévissage (B) opposée vis-à-vis de ladite direction de vissage (A) et chacune desdites surfaces d'arrêt (22) de l'autre dudit premier groupe d'éléments d'arrêt (21a) et dudit second groupe d'éléments d'arrêt (21b) vient en contact respectivement avec une première surface de contre-arrêt (24) respective dudit premier groupe d'éléments de contre-arrêt (23a) et dudit second groupe d'éléments de contre-arrêt (23b), au moins l'un dudit premier groupe d'éléments d'arrêt (21a) et dudit second groupe d'éléments d'arrêt (21b) étant soumis à une rupture à la suite de la rotation dans ladite direction de dévissage (B).

12. Dispositif (1) selon une ou plusieurs des revendications précédentes, **caractérisé en ce qu'**il comprend des moyens d'étanchéité (8) pouvant être interposés entre ladite surface de butée (7a) du premier corps (2) et ladite surface de butée (7b) du second corps (5).
